# EUROPEAN PATENT SPECIFICATION

(11) **EP 4 255 987 B1**
(45) Date of publication and mention of the grant of the patent: **27.05.2026**
(21) Application number: 21752178.0
(22) Date of filing: 15.07.2021
(51) Int. Cl.: C08L 89/00

(54) **COMPOSTABLE PLASTIC BASED ON MILK PROTEINS AND PREPARATION PROCESS THEREOF**
KOMPOSTIERBARER KUNSTSTOFF AUF BASIS VON MILCHPROTEINEN UND HERSTELLUNGSVERFAHREN DAFÜR
MATIÈRE PLASTIQUE COMPOSTABLE À BASE DE PROTÉINES DE LAIT ET SON PROCESSUS DE PRÉPARATION

(30) Priority: 03.12.2020 IT 202000029684
(43) Date of publication of application: 11.10.2023
(73) Proprietor: Splastica S.r.l., 00045 Genzano di Roma RM (IT)
(72) Inventor: GATTO, Emanuela, 00045 Genzano di Roma RM (IT); LETTIERI, Raffaella, 00018 Palombara Sabina RM (IT); ARMUZZA, Valentina, 51429 Bergisch Gladbach (DE)
(74) Representative: Perani & Partners S.p.A.
(86) International application number: PCT/IB2021/056409
(87) International publication number: WO 2022/118091

(56) References cited:
- JEFFERSON MARK T. ET AL: "Valorization of Sour Milk to Form Bioplastics: Friend or Foe?", vol. 97, no. 4, 14 April 2020 (2020-04-14), US, pages 1073 - 1076, XP055832637, ISSN: 0021-9584, Retrieved from the Internet <URL:http://pubs.acs.org/doi/pdf/10.1021/acs.jchemed.9b00754> DOI: 10.1021/acs.jchemed.9b00754

## Description

### FIELD OF THE INVENTION

The present invention is in the technical field of processes for preparing a plastic material based on natural substances; in particular, the plastic material contains milk protein, including casein and whey protein.

### BACKGROUND ART

There is increasing global awareness of the threat posed by the growth in the consumption of plastics and their consequent accumulation on the planet.

The concept of circular economy is currently seen as the central crux for solving the problem of environmental protection. According to the principles of circular economy, methods must be found to reintegrate biological materials into the biosphere.

One of the principles underlying the circular economy is eco-design, i.e., the idea of making products while taking into account, from the design step, what their use will be at the end of their life.

A valid alternative to the use of synthetic polymers is natural polymers. In the biodegradation process, the organic material is degraded by the activity of microorganisms, sunlight and other natural physical agents, which transform the starting organic substances into simple molecules totally assimilable by the environment. The biological processes involved can occur under aerobic or anaerobic conditions. In the first case, the final products are carbon dioxide and water, while in the second case there is also the formation of methane. In nature, each material undergoes a biodegradation process, which can occur also with very long times and which is influenced by environmental conditions (such as temperature).

Compostability is defined in detail by European standard UNIEN 13432, which describes the requirements which a material must have in order to be defined as compostable and the related standard confirmatory tests.

For a material to be defined as compostable, it must meet the following conditions:
- be biodegradable, reaching a biodegradation level of at least 90%, within 6 months.
- disintegrate under composting conditions into fragments which are no longer visible and distinguishable in the final compost within 3 months. Fragments larger than 2 mm up to a maximum of 10% of the initial mass are allowed.
- not show any negative effect on the composting process.
- comply with maximum levels of heavy metals added to the material: for example, germination tests of plants are carried out to check that there are no toxicity effects.
- the compost obtained must respect limits of pH, salt content, concentration of volatile solids and of nitrogen, phosphorus, magnesium and potassium.

The idea behind the creation of compostable polymers, produced from renewable sources, originates from the cycle of nature: most of the organic material generated through photosynthesis (more than 60 million tons) is reconverted by the action of some microorganisms in the starting products, CO₂ and water.

In addition to the very strong environmental impact, the use of biodegradable and compostable plastics can be a solution to the increasingly expensive post-consumer disposal problems.

The problem that currently most hinders the spread of bioplastics is the price, higher than synthetic plastics, but if the price of the latter also counted their actual disposal cost, the difference would not be so significant.

In addition to price, the spread of bioplastics is held back by other problems:
- the recent European Directive prohibits or restricts the sale of many single-use plastic items, including most bioplastics currently on the market, even if biodegradable and/or from biomass;
- there is often great difficulty in the disposal of bioplastics, also linked to confusion generated in consumers by the lack of clarity regarding the composition of the material. In many cases, indecision leads to placing bioplastics in undifferentiated waste collection;
- the presence of non-biodegradable bioplastics within the organic waste circuit can create significant damage to the composting line;
- bioplastics are often compostable only under certain conditions (in particular at higher ambient temperature), and this is a limit for places where composting takes place mainly domestically.

The dairy sector is one of the sectors in which the issue of the environmental sustainability of processes, recovery and recycling is greatly felt, considering the volume of waste and by-products that the industry must face and the costs of their disposal.

Methods are known, in the state of the art, which allow to make natural materials similar to plastic, starting from milk:
WO2013/068595 A1: The document describes a method for the production of polymeric hydrogels obtained from renewable raw materials, preferably of protein origin. In particular, the polymeric hydrogels comprise a milk-derived protein, in particular casein, which is plasticized with the use of plasticizers and heat. Among the plasticizers suitable for the purpose, the document mentions water, to be used in concentrations between 20% and 80% by weight; alcohol and polyalcohol; carbohydrates; animal proteins such as gelatine; vegetable proteins. The hydrogels described in the document are intended for the manufacture of devices for the administration of drugs suitable for systemic, intratumoural, subcutaneous, topical, transdermal and rectal applications; wound dressings or artificial skin; solid reaction means for diagnostic kits to be used in basic research (PCR, RT-PCR, in situ hybridization, in situ labelling with antibodies or other markers such as peptides, DNA or RNA probes, drugs or hormones, etc.); means for the transport of cells, tissues, organs, eggs, organisms, etc.; tissue culture media, with or without active ingredients, for basic research or commercial and therapeutic applications; iontophoresis membranes; matrices for the immobilization of enzymes or proteins for in vivo, in vitro or ex vivo use as therapeutic agents, bioreactors or biosensors; cosmeceutical applications, such as skin hydrating agents or moisturizing / humectant creams, as well as contact lenses, diapers and sanitary napkins, delivery of drugs, implants and coatings.
WO2015/010748 A1: The document describes a method for obtaining a protein-based foam, comprising polymers based on animal proteins, including casein; casein is combinable with plasticizers, including urea, animal proteins and sugars. The polymers are treated with a foaming agent in order to make a product with porosities. Suitable foaming agents are for example alkaline solutions such as those of sodium or potassium hydroxide, sodium hydrogen carbonate and the like. The foam obtainable according to the methodologies described in the document can be used for the construction of vehicles and aircraft, the construction industry, construction material and lightweight panels, non-slip coatings, composite materials, insulating layers or filler layers, including for multi-layer mouldings, the furniture industry, the electrical industry, sports equipment, toys, machine construction, the packaging industry, agricultural or safety technology, paper, adhesives, medical technology, life sciences, household articles.
EP0471558 A2: The document describes a film comprising a biopolymer (5-26% by weight) including a dispersion of droplets of a lipid (74-95% w); the film contains water in amounts less than 5% by weight. The biopolymer can be of protein origin and is selected from caseinates; agar; alginates; gelatine; gums, such as xanthan gum, locust bean gum, carrageenan gum; cellulose such as HPMC or mixtures of the foregoing. The preferred mixture is a mixture of casein and gelatine. The material thus characterized is advantageously non-toxic and can be used for both indoor and outdoor human use (as part of a food product or for therapeutic applications). The polymeric material has a cellular type porous structure (page 1, left column, lines 57-58).
Jefferson et al., J. Chem. Educ. 2020, 97, 1073-1076 discloses a method for making a compostable bioplastics, comprising: heating sour skimmed milk to 60°C; inducing acid coagulation of casein with lemon juice; removing water from the precipitate, first by dabbing it with a paper towel and then by drying at 65°C for 4 hours.

### Problems of the prior art

Attempts to make bioplastics from milk have already been performed in the state of the art, making use, in particular, of a production process which involves the cross-linking of casein with a saccharide.

Said process, described in Italian patent No. 102018000009834, comprises the following steps:
- heating mammalian milk or a milk derivative to a temperature of 70°C;
- preparing an aqueous suspension comprising a saccharide, an oxidizing agent and a functional pH regulator to give the aqueous suspension a pH of about 4.5;
- adding the aqueous suspension to the heated milk and keeping the mixture under stirring until a suspension mixture is obtained,
- filtering the suspension mixture, recovering the filtrate;
- centrifuging the filtrate to obtain the bioplastic.

The oxidizing agent plays an essential role in the above process, allowing the polymerization of casein to saccharide: in fact, oxidation in an acidic environment causes the transformation of the hydroxyl groups of sugar into aldehydes and ketones. Based on the IR characterization of the material thus obtained, the authors of the Italian patent believe that such aldehydes, in the presence of casein, react with the amino groups of the same protein. This polymerization allows to obtain a plastic material characterized by:
- biodegradability and compostability: after 30 days in a home composting dish at room temperature, there is a volume reduction of 80%;
- thermal stability in a tested temperature range of -196°C/+100°C;
- a hardness of 57 ShD.

However, the use of the oxidizing agent has several drawbacks, both operational and economic:
- it requires an additional summary step;
- it requires the use of more water (the oxidizing agent, together with saccharide and acid, are previously mixed in an aqueous suspension and then added to the milk).

Furthermore, the use of centrifugation requires greater energy consumption and an increase in production times, greatly complicating the preparation technique; in fact, the use of centrifugation requires that several centrifugation cycles are carried out before the resulting plastic has suitable features for the modelling thereof.

With a view to favouring the circular economy and in particular to favouring the dairy industries in the autonomous disposal of their processing waste, the need is felt to develop a highly simplified and economical procedure, which can be easily implemented in dairy production plants in extreme safety and without the need to resort to expensive instruments, which require qualified personnel for use.

### SUMMARY OF THE INVENTION

In the present invention, an eco-sustainable process is described, which allows to make natural biopolymers from milk protein, in particular casein and whey protein. According to a preferred embodiment, the process allows to extract natural biopolymers from organic waste. Such biopolymers are transformed into a new material, analogous to hard plastic, characterized by biodegradability and compostability.

In particular, the object of the present invention is to provide a highly simplified process for the production of a plastic material based on milk protein, in particular casein and whey protein; in fact, the process described herein does not require the use of any chemical synthesis.

The technical task mentioned and the objects stated are substantially achieved by a production process whose technical features are set out in one or more of the appended claims.

A further object of the invention is the plastic material resulting from the aforementioned production process.

The new plastic material was characterized in chemical-structural terms by Fourier transform infrared spectroscopy (FTIR) analysis. However, the three-dimensional spatial structure of the material is not yet known.

However, by making samples consisting of the plastic material of the invention, the Applicant was able to characterize it in terms of mechanical properties. As will be more evident from the detailed description of the invention and the examples, the resulting material has mechanical properties similar to those of normal plastic. It is believed that such properties are unexpected, as they cannot be found in the bioplastics based on casein currently known in the state of the art.

### Advantages of the invention

The process of the invention is highly simplified and enables the dairy industries to be able to treat and dispose of their production waste in an environmentally sustainable manner.

The resulting material has excellent mechanical features and can be shaped and processed in an equivalent and sometimes more advantageous manner than normal plastic.

Furthermore, the production process developed by the Applicant can be applied to waste materials from the dairy industry, thus avoiding the exploitation, and consequent depletion, of arable land.

The waste thus treated can also be reintroduced into the biosphere in the form of compost.

### DESCRIPTION OF THE FIGURES

Figure 1: FT-IR absorption spectrum of the sample obtained from the process described in Example 1.
Figure 2: Detail of the thermogram obtained for the sample related to example 1 from which T_{G} is obtained.
Figure 3: FT-IR absorption spectrum of the sample obtained from the process described in example 2.
Figure 4: Thermogram obtained for the sample related to example 2.
Figure 5: Load/displacement graph related to the compression tests carried out on Group A samples.
Figure 6: Load/displacement graph related to the compression tests carried out on Group B samples.
Figure 7: Comparison between the curves obtained from the compression tests carried out on Group A and Group B specimens.
Figure 8: Load/displacement graph related to the bending tests carried out on specimens in plastic obtained as in Example 1.
Figure 9: Load/displacement graph related to the bending tests carried out on specimens in plastic with an eco-friendly cross-linking agent added.
Figure 10: Dynamic-mechanical thermal analysis (DMTA) performed on a sample without plasticizer (Group C) and on a sample containing a plasticizer at 40% (Group D).

### DETAILED DESCRIPTION OF THE INVENTION

### Production process

As already mentioned, the object of the present invention is a process for preparing a plastic material based on natural polymers, said plastic material being compostable.

The process comprises the steps of:
*a)* preparing an aqueous solution containing casein and whey protein;
*b)* heating the aqueous solution at a temperature between 10° and 100°C and collecting a predetermined volume thereof;
*c)* adding a gelling agent to the predetermined volume of the aqueous solution to obtain a primary mixture, the gelling agent being in amounts between 0.1 g/ and 50 g/L on the predetermined volume of the aqueous solution;
*d)* inducing the coagulation of the casein and whey protein in the primary mixture, said step of inducing the coagulation comprising the addition of an acidic aqueous solution to the primary mixture, so as to obtain an aqueous suspension of the primary mixture having a pH between 3 and 6;
*e)* filtering the aqueous suspension of the primary mixture and collecting the filtrate, to obtain a wet precursor of the plastic material;
*f)* dehydrating the wet precursor of the plastic material by compression, at a pressure between 1000 Pa and 3 x 10⁸ Pa to obtain the plastic material,
said plastic material having an amount of residual water between 10% and 20% by weight on the total weight of the plastic material.

Preferably, the plastic material thus obtained contains residual water in amounts between 10% and 15% (w/w).

The plastic material resulting from the production process object of the invention can be obtained in compact form, where compact material means a non-porous material when observed in cross-section to the compression direction; or in expanded form (polystyrene-like).

For the purposes of the present invention, compostable means that the plastic material obtainable by the process described above is compostable in an industrial composter.

It should be noted that, advantageously, the plastic material is also compostable at room temperature (25°C-30°C).

The plastic material obtainable by the process object of the invention is compostable, according to UNIEN 13432.

### a) Preparation of a solution containing casein and whey protein.

Casein is a protein contained in mammalian milk. It should be noted that casein in milk forms micellar structures, containing different types of casein which can be grouped into two subgroups:
- calcium-sensitive casein (subtype α1, α2 and β)
- casein not sensitive to calcium (subtype k).

In mammalian milk, casein constitutes about 80% by weight of the entire protein content (https://milkgenomics.org/article/milk-casein-proteins-ancient-diverse-essential/).

Depending on the species, the total protein content in mammalian milk ranges from 27 g/L to 44 g/L (Silanikove, Nissim & Leitner, Gabriel & Merin, Uzi. (2015). The Interrelationships between Lactose Intolerance and the Modern Dairy Industry: Global Perspectives in Evolutional and Historical Backgrounds. Nutrients. 7. 7312-7331. 10.3390/nu7095340).

Whey protein forms the water-soluble, non-casein protein fraction of milk. It represents 17-21% of the total substances of milk from cows and ruminants in general. Whey protein comprises: β-lactoglobulin, α-lacttalbumin, serum albumin, immunoglobulins, bioactive peptides (https://www.enea.it/it/seguici/pubblicazioni/pdf-volumi/2006/siero-di-latte_pizzichini_web.pdf). (https://www.ene.it.it/it/seguici/pubblicazioni/pdf-volumi/2006/siero-di-latte_pizzichini_web_pdf).

Preferably, the casein and whey protein-containing solution is a waste liquid of the dairy industry, where waste liquid of the dairy industry is defined as the mammalian milk produced in a dairy industry and which is discarded because it expires or does not meet the requirements that make it suitable for sale.

According to a preferred embodiment, the waste liquid of the dairy industry is selected from the group consisting of: colostrum, whole milk, skimmed milk, partially skimmed milk, long-conservation UHT milk, whey and mixtures of the foregoing.

The mammalian milk in question can be for example selected from bovine milk, sheep milk, equine milk or mixtures of the foregoing. Preferably, the mammalian milk is selected from the group consisting of: cow milk, donkey milk, goat milk, sheep milk, buffalo milk and mixtures of the foregoing.

The aqueous solution containing casein and whey protein can also be obtained extemporaneously, after heating, by dissolving casein and whey protein in powder form in water.

### b) Heating the aqueous solution at a temperature between 10° and 100°C and collecting a predetermined volume.

Once the aqueous solution has been prepared, the liquid is heated to a temperature between 10° and 100°C.

The predetermined volume of the starting aqueous solution is variable depending on the availability of the waste liquid from the dairy industry and/or the instrumentation used for the production of the plastic material of the invention.

It is believed that at temperatures between 55°C and 70°C, the coagulation of whey protein, nitrogenous substances constituting about 17% of the protein content of mammalian milk, is induced. The Applicant believes that the precipitation of the whey protein is useful for making the plastic material of the invention, participating in the formation of a dense and resistant matrix from a mechanical point of view, together with the casein.

Once heated, the aqueous solution is collected in a predetermined volume which is established based on the capacity of the system or instrumentation used to perform the process.

Preferably, the heating step of the aqueous solution is conducted at temperatures between 30°C and 100°C, preferably between 40°C and 80°C, preferably between 50°C and 70°C, preferably equal to 60°C.

Alternatively, for the purpose of performing the process, the predetermined volume can be established after heating, thereby proceeding to heat only the volume necessary for the subsequent preparation steps.

### c) Adding a gelling agent to the predetermined volume of the aqueous solution.

The hot aqueous solution is added with a gelling agent to obtain a primary mixture; such a primary mixture is characterized by a concentration of gelling agent which ranges from 0.1 g/L to 50 g/L on the predetermined volume of waste liquid.

According to an alternative embodiment of the process of the invention, the gelling agent can be added during other steps of the process at the same concentrations.

According to a preferred embodiment, the gelling agent comprises or consists of one or more of the following substances:
- macromolecules of animal or vegetable origin, preferably selected from the group consisting of: collagen; alginic acid (E400) and alginates; agar-agar (E406); pectin (E440); locust bean gum (E410); carrageenan (E407); tragacanth (E413); gum arabic (E414),
- cellulose derivatives,
- starches,
- processed eucheuma seaweed (E407a).

It should be noted that processed eucheuma seaweed (E407a) refers to a natural polysaccharide produced from different algae (Chondrus crispus, Eucheuma spinosum, E. cottonii) present in Europe, Asia and America. E407a contains a considerable amount of cellulose.

Preferably, suitable alginates for the purposes of the present invention include sodium (E401), potassium (E402), calcium (E404) alginate.

Preferably, the gelling agent has a concentration between 0.5 g/L and 30 g/L, preferably between 1 g/L and 25 g/L, preferably between 2 g/L and 15 g/L, preferably between 3 g/L and 10 g/L, preferably between 3 g/L and 8 g/L, preferably equal to 4 g/L.

Preferably, the gelling agent contains collagen.

According to a preferred embodiment, the step of adding the gelling agent (c) comprises the sub-steps of:
*ci)* providing the gelling agent in dry form;
*cii)* hydrating the gelling agent in dry form in water, the water having a temperature < 40°C, and allowing to rest for 5 to 15 minutes, so as to obtain the gelling agent in hydrated form;
*ciii)* squeezing the gelling agent in hydrated form, to obtain the gelling agent.

The step of hydrating the gelling agent is advantageous for a homogeneous solubilization of the gelling agent in the hot aqueous solution. In fact, in most cases the gelling agent is not soluble in cold water. The hydration with water allows the gelling agent to be softened after addition to the hot aqueous solution, where the gelling agent will dissolve so as to elicit its effect in the subsequent cooling.

According to a preferred embodiment, the gelling agent containing collagen is edible gelatine.

### d) Induction of the coagulation of casein and whey protein in the primary mixture.

The acidification of the primary mixture to a pH between 3 and 6, preferably between 4 and 6, induces the coagulation of the casein. The acidification up to this pH value serves to reach the isoelectric point of the casein (pI = 4.5); the coagulation of the casein leads to the separation of such a protein from the liquid fraction of the waste liquid, in the form of a solid aggregate.

It should be noted that unlike casein, whey protein precipitates by virtue of the intense heating.

The acidification of the primary mixture is carried out by the addition thereto of an acidic aqueous solution, preferably comprising an organic or inorganic acid selected from the group consisting of: acetic acid, citric acid, malic acid, orotic acid, aspartic acid, fumaric acid, lactic acid, maleic acid, oxalic acid, pamoic acid, tartaric acid, glycerophosphoric acid, mucic acid, 2-amino-ethanesulphonic acid, cholic acid, trichloroacetic acid, trifluoroacetic acid, hydrochloric acid, hydrobromic acid, phosphoric acid and mixtures of the foregoing.

Preferably, the organic acid is acetic acid. Preferably, the inorganic acid is hydrochloric acid.

The amount of acidic aqueous solution to be added to the primary mixture is that necessary to obtain a pH between 3 and 6; in this sense, those skilled in the art, given the final pH to be reached and the acidifying properties of each acid (pKa), is able to deduce a posteriori the amount of acidic aqueous solution to be used for the process.

According to a preferred embodiment, the step of inducing the coagulation of casein and whey protein (d) comprises the sub-step of adding an eco-sustainable cross-linking agent.

Cross-linking agents suitable for the purposes of the invention include, for example, bifunctional compounds such as carbonyldiimidazole (CDI). Preferably, the eco-sustainable cross-linking agent is a compound comprising cystamine and 1,1'-carbonyldiimidazole, reacting both molecules in water in a 2:3 weight ratio.

In combination with the carbonyldiimidazole, other suitable cross-linking agents can be other diamines such as 1,6-hexanediamine and the like and 2,2'-oxydiethanamine and the like.

Preferably, the cross-linking agent is used in concentrations between 1 and 5% by weight on the total weight of the protein contained in the primary mixture.

According to a preferred embodiment, the step of inducing the coagulation (d) of the casein in the primary mixture consists of the addition of an acidic aqueous solution to the primary mixture, so as to obtain an aqueous suspension of the primary mixture having a pH between 3 and 6, preferably between 4 and 6, preferably equal to 4.5.

According to an alternative embodiment, the step of inducing the coagulation (d) of the casein in the primary mixture consists of the steps of
- adding an acidic aqueous solution to the primary mixture, so as to obtain an aqueous suspension of the primary mixture having a pH between 3 and 6, preferably between 4 and 6;
- adding an eco-friendly cross-linking agent.

### e) filtration of the aqueous suspension of the primary mixture.

The filtration can be carried out by any means known to those skilled in the art suitable for retaining the solid aggregate, separating it from the liquid fraction of the waste liquid.

The solid aggregate retained by the filter is called filtrate.

Filters suitable for the purposes of the invention are for example filters in cotton, hemp, absorbent paper or metal filters.

According to a preferred embodiment, the filtration step (e) comprises the sub-steps of:
*ei)* cooling the aqueous suspension of the primary mixture to room temperature;
*eii)* filtering the aqueous suspension of the cooled primary mixture and collecting the filtrate;
*eiii)* washing the filtrate with water or aqueous solutions at a pH between 6 and 8 and repeating the filtration (eii) to obtain the wet precursor of the plastic material.

Preferably the washing sub-step (eiii) is conducted 1 to 5 times, preferably 2 to 4 times, preferably 3 times. The washing is advantageous for removing the whey, lactose and mineral salts from the filtrate.

Alternative aqueous solutions to water and suitable for washing the filtrate are, for example, flavoured waters of vegetable origin which can impart a pleasant smell to the filtrate (sage water, lavender water).

According to a further embodiment, the filtration step (e) preferably comprises the sub-step of mixing the filtrate with additives selected from the group consisting of: plasticizers, further thickening agents, antimicrobials, scented essences, dyes, preservatives, antioxidants, fortifying additives, organic fillers.

Suitable plasticizers for the purposes of the present invention are natural plasticizers selected from the group comprising: water, glycerol, glycerol monoacetate, diacetate or triacetate, polyglycerol, glycerol monostearate, sorbitol, sorbitan, mannitol, maltitol, ethylene glycol, diethylene glycol, propylene glycol, triethyl citrate, and the like.

Suitable thickening agents are natural saccharide-type thickening agents; preferably said saccharide-type thickening agents are selected from the group consisting of: monosaccharides such as glucose; disaccharides such as sucrose; polysaccharides such as cellulose, microcrystalline cellulose or cellulose derivatives; starch; guar; gellans; dextran or derivatives thereof; and mixtures of the foregoing.

The preferred saccharide is cellulose.

Suitable antimicrobials are antimicrobials of natural origin, such as tea tree oil, or antimicrobials used in the food industry such as sorbic acid (E200) and sorbates; ethyl-p-hydroxybenzoate (E214) and the like (E214), sodium nitrite (E250) and nitrates, benzoic acid (E210) and benzoates, sodium sulphite (E221), sodium bisulphite (E222) and the like, sodium metabisulphite (E223) and the like, propionic acid (E280) and propionates, acetic acid (E260) and acetates, sulphur dioxide (E220), lactic acid (E270).

Suitable scented essences are scented essences used in the food industry such as tea tree oil, citrus essences (such as lemon, orange), bergamot, rosemary and other spices.

Suitable dues can be in the form of gels, liquids or powders. Preferably, the dyes are selected from the group consisting of: gypsum white (E 141), titanium white (E171), anthocyanin blue (E 142), indigo blue (E 132), beta-carotene (E 160), quinoline (E 104), gold yellow (E103), HT brown (E155), bright black (E 151), cochineal red (E 120), tannin (E 181), dark green (E142), chlorophylls, carotene, indigo and anthocyanins.

Suitable preservatives are preservatives used in the food industry such as sorbic acid (E200) and benzoic acid (E210) and organic salts thereof such as sodium sorbate (E201) and sodium benzoate (E211), but also other types such as nisin (E234), sulphur dioxide (E220), sulphites and bisulphites, including calcium sulphite (E226), inorganic acids such as boric acid (E284) and salts such as borax (E285), amines such as hexamethylenetetramine (E239).

Suitable antioxidants are antioxidants used in the food industry such as 1-ascorbic acid (E300) and ascorbates, propyl gallate (E310) and the like, phosphoric acid (E338) and phosphates, tartaric acid (E334) and tartrate, sodium lactate (E325) and the like, sodium citrate (E331) and the like, natural extracts rich in tocopherol (E306) and synthetic tocopherols, lecithin (E322).

Fortifying additives are additives which improve the mechanical properties of the plastic material. In particular, suitable fortifying additives for the purposes of the present invention are:
- inert additives of natural origin, such as pulverized walnut shells,
- fibrous additives, such as vegetable fibres, for example hemp fibres.

It has been observed that the presence of fibrous additives in appropriate amounts improves the ductile behaviour of the material, while the presence of inert additives increases the strength thereof.

Organic fillers are, for example, seeds, vegetable fibres or peels obtained from the processing of fruit or vegetables and organic waste of any kind. It should be noted that, advantageously, the addition of seeds to the filtrate, in addition to improving the mechanical properties of the product, makes the plastic material resulting from such an addition a suitable vehicle for the cultivation of the seeds.

In particular, artefacts made with the plastic material of the invention, added with seeds, can be planted in the ground after use. In the soil, the seeds will sprout and the bioplastic will decompose quickly, according to the typical timing of a compostable material.

The material can also be added with
- ecological lubricants and thermal stabilizers: illustrative and non-limiting examples of stabilizers are calcium and calcium/zinc stabilizers, organic stabilizers; and/or
- co-stabilizers: illustrative and non-limiting examples are polyols, soybean oil, antioxidants and organic phosphates.

### f) dehydrating the wet precursor of the plastic material by compression.

Once the wet precursor of the plastic material has been obtained, it is dehydrated by compression. The pressure to be applied is between 1,000 and 3 x 10⁸ Pa, preferably between 1,000 and 60,000,000 Pa, preferably between 1,000 and 12,000,000 Pa, preferably between 1,000 and 300,000 Pa, preferably between 1,000 and 60,000 Pa, preferably between 1,000 and 12,000 Pa, preferably between 1,000 and 6,000 Pa.

By applying pressures lower than that indicated, the plastic material obtained is still too wet for the purpose of processing. In order to bring it to the right degree of humidity (between 10% and 20% by weight, preferably between 10% and 15% by weight) the material can be left to dry passively or subjected to heat treatments with temperatures not exceeding 35°C.

Compression is a very important step for the success of the plastic material of the invention. In fact, the Applicant believes that the compression imparted to the wet precursor in this step is responsible for the mechanical properties of the resulting plastic material.

It should be noted that other methods of dehydration, such as centrifugation, do not allow the plastic material of the invention to be obtained, as they alter the mechanical properties thereof. Centrifugation, for example, tends to "shred" the wet precursor of the plastic material, which will consequently compact with extreme difficulty.

According to a preferred embodiment, the step of dehydrating by compression (f) is carried out by compressing the wet precursor of the plastic material between two filters. Suitable filters for this purpose are, for example, filters in cotton, hemp, absorbent paper, metal filters, or combinations of the foregoing.

It should be noted that the plastic material resulting from the dehydration by compression step (f) has an amount of residual water between 10% and 20% by weight on the total weight of the plastic material, preferably between 10% and 15% (w/w).

At this level of humidity, the plastic material can be easily modelled to form various types of objects. Preferably, the process comprises the further steps of:
g) modelling the plastic material;
h) drying the plastic material by means of
   - heat treatment with an air flow at a temperature between 20°C and 35°C, preferably between 25°C and 30°C, preferably equal to 25°C;
   - mechanical compression treatment, applying a pressure between 1000 and 3x 10⁸ Pa, to obtain the plastic material in dry form, having a residual water content between 5% and 10% by weight on the total weight of the plastic material.

It should be noted that, according to an alternative embodiment, the plastic material can also be obtained in dry form using lyophilization.

After the drying step, the dry plastic material can be sanded with abrasive instruments of different grain sizes. The sanding will not discolour the material or make it opaque. Advantageously, the material subjected to sanding does not have scratches as occurs when sanding plastic objects.

Advantageously, the dry plastic material is suitable for surface customization with text or logos by printing, such as laser printing; this allows the use of harmful inks to be avoided.

It should be noted that the further modelling step (g) of the plastic material is subsequent to the dehydration by compression step (f).

According to a first embodiment, the modelling step (g) occurs simultaneously with the dehydration by compression step (f), by means of a compression mould.

According to a second embodiment, the modelling step (g) involves preparing the dry plastic material, in the form of pellets. In particular, the modelling step (g) comprises the sub-step of:
gi) arranging an extruder for the production of pellets,
gii) introducing the plastic material into the mould for the production of pellets,
giii) initiating the extrusion by the extruder and collecting the dry plastic material in the form of pellets.

According to this second embodiment, the modelling step (g) precedes the drying step (h).

The extruder for the production of pellets preferably comprises a mould having
- a cylindrical body, extending between two opposite ends along a longitudinal axis, said cylindrical body defining a cylindrical chamber and having two openings: the first opening configured for feeding the plastic material inside the cylindrical chamber and preferably positioned on the surface of the cylindrical body, parallel to the longitudinal axis; the second, positioned near one of the two ends of the cylindrical body, preferably arranged perpendicular to the longitudinal axis, said second opening being configured for the exit of the plastic material from the cylindrical chamber;
- a propeller, positioned in the cylindrical chamber and configured to move along the longitudinal axis of the cylindrical body during rotation, in the direction from the first opening to the second opening, to advance the plastic material towards the second opening, the second opening being provided with a perforated plate from which the material exits in the form of pellets. The diameter of the pellets is adjustable by selecting a perforated plate having meshes of predetermined size;
- a blade, positioned near the second opening of the cylindrical body, outside the cylindrical chamber, configured to cut the plastic material exiting in the aforesaid pellets. The length of the pellets is adjustable by setting the cutting frequency of the blade and the output speed of the extruded material.

According to a third embodiment, the modelling step (g) involves preparing the dry plastic material, in the form of powder. In this third embodiment, the drying step (h) precedes the modelling step (g). In particular, the modelling step (g) comprises the sub-steps of:
g) subjecting the dry plastic material to a shredder having a plurality of blades configured for pulverizing the dry plastic material;
gii) starting the shredder and collecting the dry plastic material in powder form.

According to a fourth embodiment, the modelling step (g) involves preparing artefacts consisting of the plastic material object of the invention. Preferably the preparation of artefacts is done by means of the use of injection printing systems, known to those skilled in the art and commonly used for making plastic artefacts. In this third embodiment, the drying step (h) follows the modelling step (g).

According to a fifth embodiment, the modelling step (g) involves preparing films consisting of the plastic material object of the invention. Preferably the preparation of artefacts is done by means of the use of systems known to those skilled in the art and commonly used for making plastic films. In this third embodiment, the drying step (h) follows the modelling step (g).

### Plastic material

A further object of the present invention is the compostable plastic material obtainable with the process according to any one of claims 1 to 8.

It should be noted that what is described for the production process of the material applies, as such, to the plastic material described below.

As already mentioned above, the chemical structure of the material has been characterized by FTIR analysis, but the actual three-dimensional organization of the molecules in the plastic material resulting from the process of the invention has not yet been clarified.

However, the Applicant has characterized the plastic material for the mechanical properties thereof. Given the simplicity of the preparation method, the mechanical features of the resulting material are considered unexpected and surprising, considering that none of the casein-based plastic materials, known in the state of the art, had been characterized as such.

It should be noted that the plastic material preferably has a density between 1,000-1,500 kg/m³.

Such a density value, as will be evident from the experimental section of the application reported in the Examples, is comparable with that of known plastic materials, of synthetic origin.

Preferably, the plastic material comprises naturally occurring organic fillers, said organic fillers being preferably selected from seeds, vegetable fibres and skins or other naturally occurring fortifying additives.

According to a preferred embodiment, the plastic material comprises one or more plasticizers, said plasticizers preferably being in a concentration between 5% and 80% by weight, on the total weight of the plastic material.

Suitable plasticizers for the purposes of the invention are those already mentioned in the section "e) filtration of the aqueous suspension of the primary mixture" of the present application.

As described in the subsequent compression tests, the plastic material of the invention is characterized by a maximum cure point preferably between 6.8 MPa and 11.0 MPa and by a Young's modulus preferably between 1.1 MPa and 2.4 MPa.

The material also has good wettability properties; in the presence of distilled water, the wettability angle (θ), measured on a surface of the plastic material, is preferably between 75° and 97°. It should be noted that a low contact angle (θ < 90°) is indicative of a solid partially wetted by the liquid (hydrophilicity of the material, in the case where the liquid used for the measurement is water); while a high contact angle (θ > 90°) is indicative of a solid which has little tendency to wet (hydrophobia, in the case where the liquid used for the measurement is water).

It is further believed that the plastic material resulting from the process of the invention is at least partially amorphous and characterized by a glass transition temperature between 20°C and 180°C.

It should be noted that the glass transition temperature can vary for the addition of plasticizers (see the DMTA analysis described in Example No. 7), where for the purpose of the present invention plasticizer refers to one or more substances selected from the group consisting of water, glycerol, glycerol monoacetate, diacetate or triacetate, polyglycerol, glycerol monostearate, sorbitol, sorbitan, mannitol, maltitol, ethylene glycol, diethylene glycol, propylene glycol, triethyl citrate, and the like.

Still preferably, the glass transition temperature is between 60°C (at higher plasticizer concentrations) and 170°C (at lower plasticizer concentrations) when the plastic material comprises one or more plasticizers in a total concentration between 0% and 15% by weight.

Instead, the glass transition temperature is preferably between 20°C (at higher plasticizer concentrations) and 60°C (at lower plasticizer concentrations) when the plastic material comprises one or more plasticizers in a total concentration between 15% and 80% by weight.

According to a particularly preferred form, when the plastic material comprises water and glycerol as plasticizers, said plasticizers preferably being in a total concentration between 6% and 50% by weight, the transition temperature of the plastic material is between 40°C and 92°C.

Still preferably, when water and glycerol are used together as plasticizers, the water is in a concentration between 5% and 10%, preferably equal to 6% by weight on the total weight of the plastic material; the glycerol is in a concentration between 0% and 40% by weight on the total weight of the plastic material.

The product according to the invention can be used as an alternative material to plastic, in different technical fields.

Illustrative and non-limiting examples are: components for cars, boats and aircraft; to make packaging for the transport and storage of food products; for the production of furniture, household items; for manufacturing shelving for the storage and/or transport of useful products in any industry sector; for manufacturing elements for the electronics industry; for manufacturing toys, sports objects; for the medical industry, for tableware, bottle caps, coffee stirrers and gadgets.

In particular, the plastic material can be shaped as is to obtain manufactured artefacts and films, or shaped into filaments, powders and pellets suitable for subsequent processing to make artefacts.

Preferably, the modelling of the plastic material to obtain artefacts is carried out by known transformation techniques such as extrusion, compression moulding, injection moulding, blow moulding, filming.

### EXAMPLES

### 1. Base Formulation Example

### 1. Methodology.

One litre of milk (1 L) (partially skimmed, long-conservation UHT-treated) is heated to 55°C. 4 g of hydrated food gelatine are added. 200 ml of 6% acetic acid are added to the solution; the formation of the precipitate is observed. About one hour is waited.

The precipitate formed by acidification is then filtered through a cotton cloth and the collected solid is washed 3 times with water. 5 drops of tea tree oil are added to the obtained mass and it is mixed until it is homogeneous. The compound is compressed between two layers of cotton fabric to partially remove the water. The obtained mass is then modelled and dehydrated by air flow at 25°C. The sample obtained has a residual water content between 5% and 10% (w/w) approximately.

### 2. Characterization.

### 2.1 Density.

The density of the material obtained was calculated (through the measurement of volume and mass) and was found to be 1310 kg/m³.

Table 1 shows the density values of some commercial plastics as an example (ref. AmesWeb, "Density of Plastics and Polymers", www.amesweb.info/Materials/Density-of-Plastics).

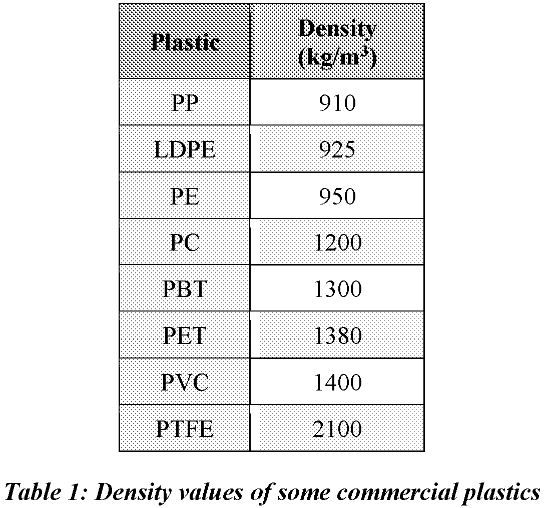

The density of the material obtained is comparable to that of PBT (polybutylene terephthalate), a semi-crystalline thermoplastic polyester with excellent chemical resistance, mechanical rigidity, exceptional electrical properties and heat resistance, with application markets for household appliances, electrical components, automotive industry.

### 2.2. Wettability.

The contact angle θ was measured as an index of the wettability of the surface of the material. Wettability is defined as the ability of a liquid to maintain contact with a solid surface and is due to the intermolecular interactions which occur when the liquid and solid come into contact: the contact angle depends on the balance between the cohesive and adhesive forces.

For the examination of the plastic material obtained in this case, the static contact angle (equilibrium contact angle on a horizontal surface) was measured by depositing, on a flat sample of plastic material, a drop (0.05 ml) of pure liquid (distilled water) and measuring the internal angle between the surface and the plane tangent to the drop at the contact point.

The average value of the angle θ (average of 4 measurements) for the material obtained in the test example is 90.3° ± 6.0°, which corresponds to an intermediate degree of wettability.

However, the data suggests that the material can have acceptable wettability features for all the uses of bioplastic for which an average degree of water repellence is required for short periods.

### 2.3. Chemical analysis

The chemical analysis of the material was carried out by Fourier transform infrared spectroscopy (FT-IR).

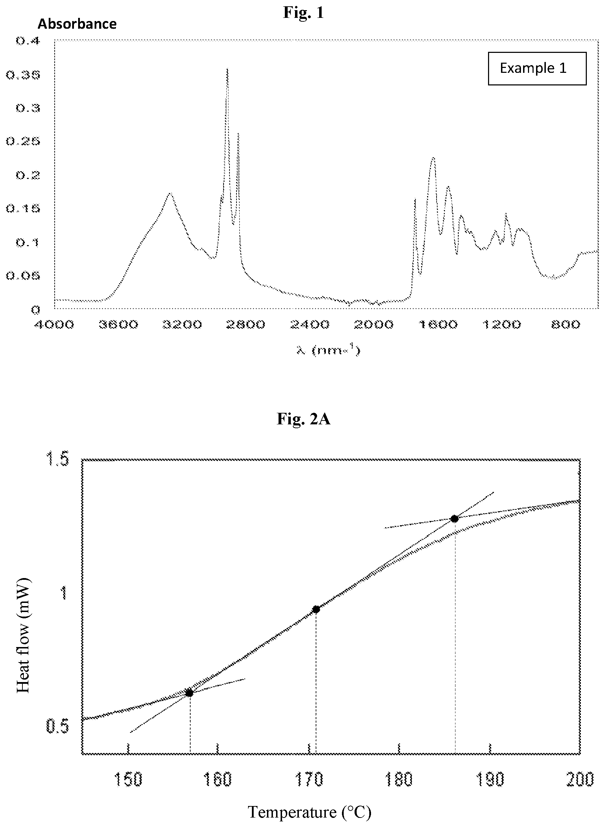

Analysing the IR absorption spectrum shown in Figure 1, the following signals can be observed:
- in the region 3200 - 3500 cm⁻¹ the absorption signals due to the stretching of the O-H bond, present as an enlarged and diffused band (in the case of -OH groups in polymer association between 3400 and 3200 cm⁻¹); the absorption signals due to the stretching of the N-H bond which appear between 3300-3500 cm⁻¹ and normally present as narrower bands than those of the O-H bond.
- in the fingerprint region (1600 - 600 nm⁻¹) there is an absorption signal attributable to the stretching of the C=O of the primary amide, generally located at 1690 - 1630 cm⁻¹.

### 2.4. Differential scanning calorimetry (DSC).

Analysis by differential scanning calorimetry allowed the determination of the glass transition temperature (T_{G}) of the sample.

The analysis was carried out by setting a thermal ramp from room temperature to 200°C with a degree of advancement of 4°C/min.

From the thermogram shown in Figure 2 it is possible to observe an endothermic peak at 30-35 °C, an exothermic peak at about 80-85 °C. The increase in heat flow is observed at the glass transition temperature, around 170 °C.

The density of the amorphous solid, due to the empty spaces, is lower than that of the crystalline solids, moreover the amorphous material is more fragile and less resistant than the corresponding crystalline material. However, the non-crystalline structure of the material is closely linked to the fundamental feature sought in the material object of this invention, biodegradability. It should be recalled that biodegradability is influenced by polymer crystallinity: in fact, if it is very high, the hydrolysable groups of the polymer become inaccessible to microorganisms, which preferably attack the amorphous part of the polymers and then the crystalline part. The amorphous region is degraded before the crystalline region. The lower order of the amorphous structure allows the penetration of the enzymes in the polymer.

### 2. Formulation example with the addition of plasticizers.

### 1. Methodology.

One litre of milk (partially skimmed, long-conservation UHT-treated) is heated to 55°C. 4 g of hydrated food gelatine are added. 200 ml of 6% acetic acid are added to the solution and the formation of the precipitate is observed. About one hour is waited. The precipitate formed by acidification is then filtered through a cotton cloth and the collected solid is washed 3 times with water.

2.5 g/100g of microcrystalline cellulose and 3 ml/100g of glycerol are added to the obtained mass and mixed until it is homogeneous. 2 ml/l citric acid, 5 drops of tea tree oil and 5 drops of essential oil of lavender are also added. Mixing is performed until the mass is homogeneous. By means of compression between two layers of cotton fabric, most of the water is eliminated. The obtained mass is then modelled and dehydrated by air flow at 25°C. The sample obtained has a residual water content between 5% and 10% (w/w) approximately.

### 2. Characterization

### 2.1 Density.

The density of the obtained material was calculated and found to be 1,090 kg/m³. The methodology followed for the measurement is the same as described in Example 1.

### 2.2. Wettability.

The average value of the contact angle θ is 78.1° ± 2.3°. The methodology followed for the measurement is the same as described in Example 1.

### 2.3. Chemical analysis

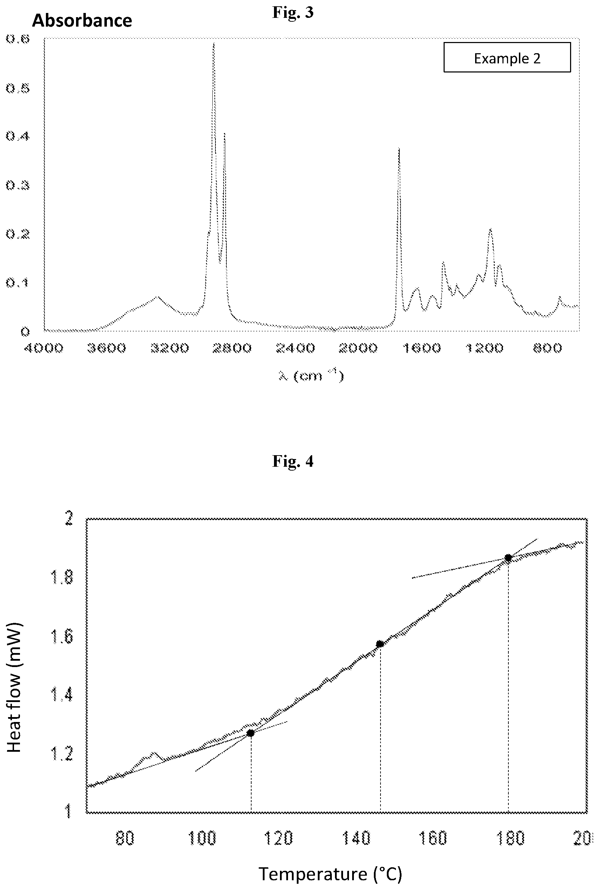

The chemical analysis of the material was carried out by Fourier transform infrared spectroscopy (FT-IR) (Figure 3).

In the FTIR spectrum there is an absorption signal attributable to the presence of an imine, given the presence of the second absorption characteristic of the imine linked to the stretching of the double bond C=N. Generally visible as an average band at 1690-1640 cm⁻¹, the signal here is probably observable at 1640 cm⁻¹.

The formation of an imine by reaction between an aldehyde or ketone group and a primary amine in an acidic environment is considered very likely.

### 2.4. Differential scanning calorimetry (DSC)

Figure 4 shows the analysis conducted on the sample by differential scanning calorimetry. In this case the T_{G} was measured at approximately 140°C.

### 3. Formulation example with the addition of a cross-linking agent.

One litre of milk (partially skimmed, long-conservation UHT-treated) is heated to 55°C. 4 g of hydrated food gelatine are added. 200 ml of 6% acetic acid are added to the solution and the formation of the precipitate is observed. About one hour is waited. The precipitate formed by acidification is filtered through a cotton cloth and the collected solid is washed 3 times with water.

2.5 g/100g of microcrystalline cellulose and 3 ml/100g of glycerol are added to the obtained mass and mixed until it is homogeneous. 2 ml/l citric acid, 5 drops of tea tree oil and 5 drops of essential oil of lavender are also added. Mixing is performed until the mass is homogeneous.

A cross-linker is added to the mass obtained in a concentration equal to 2.5% by weight of the proteins extracted from the milk: there are 32 g of protein/100 ml in the milk used, of which 78% (25 g/l) are casein (being cow's milk).

The cross-linker solution was prepared (from literature) by reacting cystamine and 1,1'-carbonyldiimidazole (CDI) in 2:3 weight ratio, in H₂O, at room temperature.

The cross-linker synthesis procedure is carried out, in detail, as follows: 2 g of cystamine are dissolved in 30 ml of water. 3 g of CDI are added and the solution is stirred manually for a few seconds. A reaction time of 30 minutes is let to pass, during which the formation of white precipitate is observed. After the reaction time has elapsed, the reaction product, which is a precipitate, is brought into solution by acidifying with HCl.

It should be noted that following the addition of the cross-linker, the final mass of plastic material has a pH around 5.

By means of compression between two layers of cotton fabric, most of the water is eliminated. The obtained mass is then modelled and dehydrated by air flow at 25°C.

### 4. Basic formulation example: variation of the milk heating temperature.

One litre of fresh cow's milk, whole, is heated to 80°C. 8 g of hydrated food gelatine are added. 200 ml of 6% acetic acid are added to the solution and the formation of the precipitate is observed. About one hour is waited.

The formed precipitate is then filtered through a cotton filter and the collected solid is washed 3 times with water and flavoured with essential oil of lavender. Natural dye in red powder is added to the mass. Mix until the mass is homogeneous. By means of compression between two layers of absorbent paper, the excess of water is eliminated. The obtained mass is then modelled and compressed by hydraulic press and dehydrated in a dryer at 35°C.

### 5. Basic formulation example: variation of the milk heating temperature.

A volume of 10 litres of whole cow's milk is heated to 85°C. 4 g/l hydrated food gelatine is added. 200 ml/l of 6% acetic acid are added to the solution and the formation of the precipitate is observed. A sufficient time for the mixture to return to room temperature is waited.

The precipitate is filtered through a hemp filter and the collected solid is washed 3 times with water. Vanilla flavouring and green food colouring are added to the mass. Mixing is perfomred until the mass is homogeneous. By means of compression between two layers of absorbent paper, most of the water is removed. The obtained mass is then modelled and dehydrated by air flow at 25°C.

### 6. Mechanical characterization of specimens.

### 1. Mechanical Tests

Specimens were made in the plastic material of the invention:
Specimens Group A) Formulation related to Example no.1.

Specimens Group B) Formulation related to Example no. 1 + cross-linker as per Example 3. The cross-linking agent was added at 2.5% by weight on the total weight of proteins extracted from the milk in order to improve the polymer cross-linking, added at 2.5%.

The specimens were obtained by manual compression of the material inside a mould specially made of PLA using a 3D printer, measuring 1.7 x 1.7 x 18 cm (V = 52 cm³), subsequent ejection by means of a wooden piston and drying at room temperature. The pressure applied during compression is between 3000-6000 Pa.

The tests were carried out using the instrument Instron 4482, provided with a load cell of 10 kN ±1%. The speed of the crossbar was set at 0.5 mm/min ±1%.

From the compression and bending tests, data were obtained in graphs which show the trend of the load applied as a function of the movement.

By obtaining the pressure data on the sample area and the percentage deformation of each datum, the Stress/Deformation graph (σ-ε) was obtained.

### 2. Compression Tests

The specimens used for the compression tests are parallelepipeds of the size 12.7 x 12.7 x 25.4 mm.

For the analysis of the compression tests, a division of the stress/deformation graph into three zones is considered:
- The first section shows a linear pattern which describes the elastic behaviour, in accordance with Hook's law. Elastic behaviour refers to the reaction of the material to an initial stress range, from the beginning of the deformation to the yield point, which can allow the return to the initial shape. The Young's modulus is obtained by calculating the modulus tangent to the straight section of the curve, characteristic for each material.
- Once the yield point has been exceeded, the plastic behaviour begins: the polymers in this case do not need too much effort to deform, and quickly reach the breaking load point.
- Beyond the breaking load, the necking zone begins, where the sample only widens at a point of the length thereof and continues to deform even if the stress decreases up to maximum compression.

### Group A

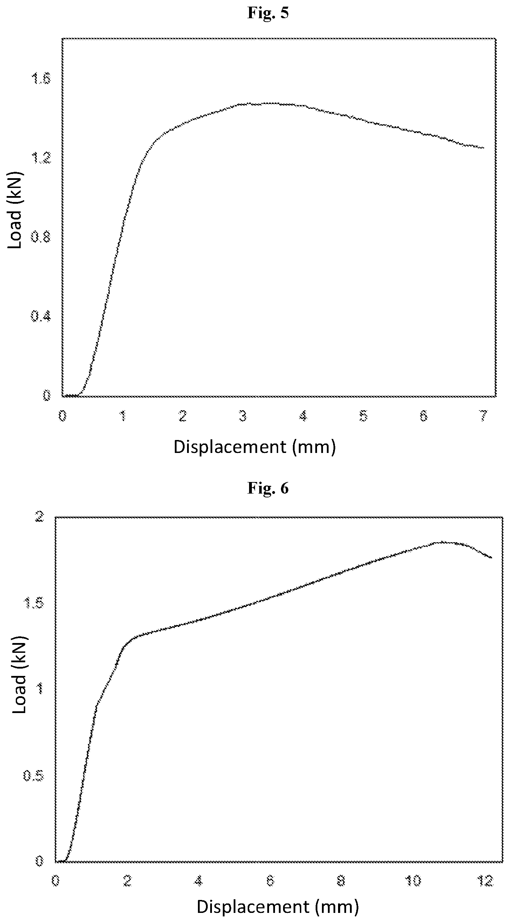

The plastic material of the specimens of group A, without additives, turns out to be hard; it quickly reaches the load point (Figure 5).

The Group A specimens are not very flexible: when the first cracks begin to form on the specimen, it is observed that the fractures produce a crumbling of the material.

Nevertheless, the material has a slow yielding and necking and is found to have good resistance to breakage and load.

### Group B

The addition of the cross-linker allowed to obtain a material which shows an elastic stretch similar to the plastic material of group A: the load point from which the plastic deformation begins is almost analogous (Figure 6).

The material in this case shows a very distant breaking point from the yield point, a very long and constant plastic part in which the material maintains the load up to about 1.8 kN without showing large breaks: the specimen remains cohesive, without crumbling, and shows only a few slight cracks parallel to the compression direction.

Table 2 shows the Young's modulus values calculated for the Group A and Group B specimens.

| **Group** | **Young's Modulus [MPa] (n = 3)** |
|---|---|
| A | 2.1±0.2 |
| B | 1.76±0.01 |

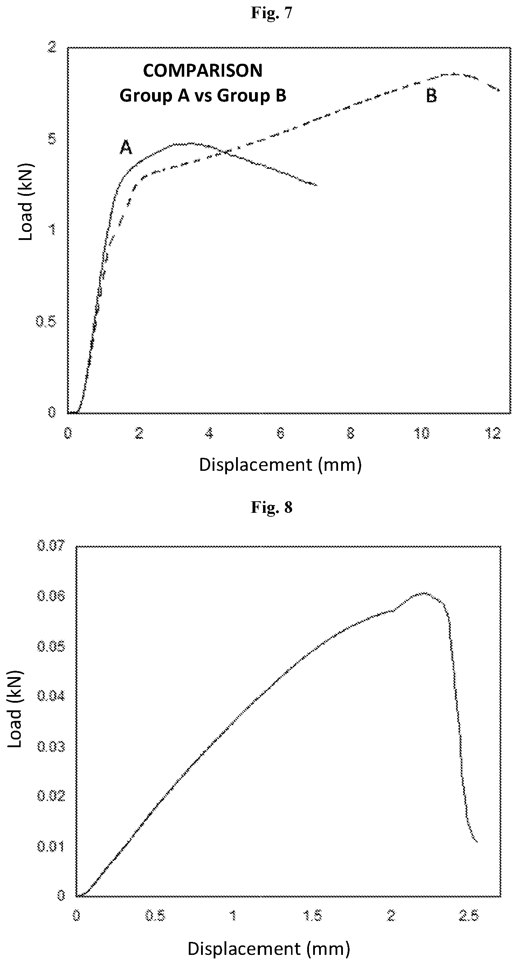

Figure 7 compares the curves obtained from the measurements carried out on Group A and Group B.

### 3. Bending Tests

The specimens used for the bending tests are parallelepipeds of the size 13 x 1.4 x 1.4 cm.

For the bending tests, the specimen to be tested was supported on two parallel rollers at a fixed distance and subjected to a load at the centre point (three-point bending test).

The load, which operates perpendicular to the support surface, is exerted with a gradual progression (at a speed of 0.5 mm/min) in order to record the deformations of the material by placing them in relation to the load exerted, up to the breaking point.

The bending tests confirm that the plastic material without additives (A) has a good resistance to breakage and is not rigid (the descent of the curve is not clear, as occurs for very fragile materials) (Figure 8).

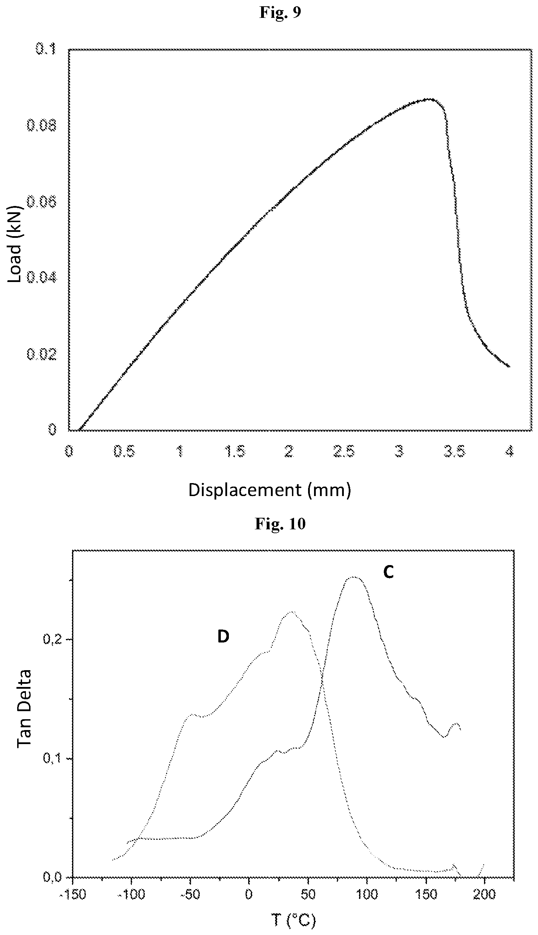

The plastic matrix of the Group B specimens provides a stronger material than the Group A plastic material, as can also be seen from the bending graph showing a higher maximum achieved load (Figure 9).

### 7. Thermal characterization of the specimens as a function of the presence of plasticizer.

Specimens were made in the plastic material of the invention:
Specimens group C) - formulation without plasticizer: One litre of milk (1 L) (partially skimmed, long-conservation UHT-treated) is heated to 55°C. 4 g of hydrated food gelatine are added. 200 ml of 6% acetic acid are added to the solution; the formation of the precipitate is observed. Wait about one hour.

The precipitate formed by acidification is then filtered through a cotton cloth and the collected solid is washed 3 times with water. The compound is compressed between two layers of cotton fabric to partially remove the water. The obtained mass is then modelled. In this case, the specimen is not subjected to dehydration and the plastic material obtained is characterized by a residual water content between 10% and 20% (w/w) approximately.

Specimens group D) - formulation comprising 40% plasticizer: One litre of milk (partially skimmed, long-conservation UHT-treated) is heated to 55°C. 4 g of hydrated food gelatine are added. 200 ml of 6% acetic acid are added to the solution and the formation of the precipitate is observed. About one hour is waited. The precipitate formed by acidification is then filtered through a cotton cloth and the collected solid is washed 3 times with water.

Glycerol is added to the obtained mass in a concentration equal to 40% by weight and mixed until it is homogeneous. Mixing is performed until the mass is homogeneous. By means of compression between two layers of cotton fabric, most of the water is removed. The obtained mass is then modelled. As in the case of group C, the plastic material obtained was not dehydrated, maintaining a residual water content of about 10-20% (w/w).

### 7.1. - Dynamic-mechanical thermal analysis

The specimens were subjected to dynamic-mechanical thermal analysis (DMTA) to measure the damping factor (Tan Delta) of the plastic material, when subjected to an increase in temperature.

The measurements were conducted at a frequency value of 1 Hz; the temperature increase was modulated over a time period of 100 min with a pace of 3°C/min.

The trend of the Tan Delta/°C curve is shown in the graph of Figure 10: The maximum of the curve corresponds to the Tg value of the compound. In the case of the plasticizer-free plastic material (group C), the Tg was recorded at a value of 92.1°C. Such a value undergoes a movement of about -50°C (Tg = 40.3°C) as a function of the addition of the plasticizer (group D).

It is believed that this reduction in Tg, together with the reduction in Tan Delta, is indicative of a greater elasticity of the plastic material with the plasticizer added.

## Claims

1. Process for preparing a plastic and compostable material, based on natural polymers, comprising the steps of:
*a)* preparing a solution containing casein and whey protein;
*b)* heating the aqueous solution at a temperature between 10 and 100°C and collecting a predetermined volume thereof;
*c)* adding a gelling agent to the predetermined volume of the aqueous solution to obtain a primary mixture, the gelling agent being in amounts between 0.1 and 50 g/L on the predetermined volume of the aqueous solution;
*d)* inducing the coagulation of the casein in the primary mixture, said step of inducing the coagulation comprising the addition of an acidic aqueous solution to the primary mixture, so as to obtain an aqueous suspension of the primary mixture having a pH between 3 and 6;
*e)* filtering the aqueous suspension of the primary mixture and collecting the filtrate, to obtain a wet precursor of the plastic material;
*f)* dehydrating the wet precursor of the plastic material by compression, at a pressure between 1,000 and 3 x10⁸ Pa to obtain the plastic material,
said plastic material having an amount of residual water between 10% and 20% by weight on the total weight of the plastic material.

2. Process according to claim 1, wherein the aqueous solution containing casein and whey protein is a waste liquid from the dairy industry selected from the group consisting of: colostrum, skimmed milk, partially skimmed milk, whole milk, whey, long-conservation UHT milk and mixtures of the foregoing.

3. Process according to claim 1 or 2, wherein the acidic aqueous solution is a solution in water of an organic or inorganic acid selected from the group consisting of: acetic, citric, malic, oxalic, orotic, aspartic, fumaric, lactic, maleic, pamoic, tartaric, glycerophosphoric, mucic, 2-amino-ethanesulphonic, cholic, trichloroacetic or trifluoroacetic, hydrochloric, hydrobromic, phosphoric acid and mixtures of the foregoing.

4. Process according to any one of claims 1 to 3, wherein the step of adding the gelling agent (c) comprises the sub-steps of:
*ci)* providing a dry gelling agent;
*cii)* hydrating the dry gelling agent in water, the water having a temperature < 40°C, and allowing to rest for 5 to 15 minutes, so as to obtain the gelling agent in hydrated form;
*ciii)* squeezing the gelling agent in hydrated form, to obtain the gelling agent.

5. Process according to any one of claims 1 to 4, wherein step d) of coagulating the casein comprises the sub-step of adding an eco-sustainable cross-linking agent.

6. Process according to any one of claims 1 to 5, wherein the filtration step (e) comprises the sub-steps of:
*ei)* cooling the aqueous suspension of the primary mixture to room temperature;
*eii)* filtering the aqueous suspension of the cooled primary mixture and collecting the filtrate;
*eiii)* washing the filtrate with water or aqueous solutions at a pH between 6 and 8 and repeating the filtration step *eii)* to obtain the wet precursor of the plastic material.

7. Process according to any one of claims 1 to 6, wherein the filtration step (e) comprises the sub-step of mixing the filtrate with additives selected from the group consisting of: plasticizers, further thickening agents, antimicrobials, scented essences, dyes, preservatives, antioxidants, fortifying additives, organic fillers.

8. Process according to any one of claims 1 to 7, comprising the further steps of:
*g)* modelling the plastic material;
*h)* drying the plastic material by means of
- heat treatment with an air flow at a temperature between 25°C and 35°C, or
- mechanical compression treatment, applying a pressure between 1000 and 3 x 10⁸ Pa, or
- lyophilization
to obtain the plastic material in dry form, having a residual water content between 5% and 10% by weight on the total weight of the plastic material.

9. Compact and biodegradable plastic material obtainable by the process according to any one of claims 1 to 8.

10. Plastic material according to claim 9 having a density between 1,000-1,500 kg/m³.

11. Plastic material according to claim 9 or 10 comprising one or more plasticizers in a total concentration between 5% and 80% by weight on the total weight of the plastic material (w/w).

12. Plastic material according to any one of claims 9 to 11 comprising organic fillers of natural origin.

13. Plastic material according to claim 12, wherein the organic fillers of natural origin are selected from seeds, vegetable fibres and skins derived from the processing of fruit or vegetables or organic waste of any kind.

14. Use of the material according to any one of claims 9 to 13 for the production of artefacts, films, filaments, powder or pellets.

## Patentansprüche

1. Verfahren zur Herstellung eines kompostierbaren Kunststoffmaterials auf Basis natürlicher Polymere, die folgenden Schritte umfassend: a) Herstellen einer Lösung, die Kasein und Molkenprotein enthält; b) Erhitzen der wässrigen Lösung auf eine Temperatur zwischen 10 und 100°C und Sammeln eines vorbestimmten Volumens davon; c) Zugeben eines Geliermittels zu dem vorbestimmten Volumen der wässrigen Lösung, um eine Primärmischung zu erhalten, wobei das Geliermittel in Mengen zwischen 0,1 und 50 g/L bezogen auf das vorbestimmte Volumen der wässrigen Lösung vorliegt; d) Induzieren der Koagulation des Kaseins in der Primärmischung, wobei der Schritt des Induzierens der Koagulation die Zugabe einer sauren wässrigen Lösung zu der Primärmischung umfasst, um eine wässrige Suspension der Primärmischung mit einem pH-Wert zwischen 3 und 6 zu erhalten; e) Filtrieren der wässrigen Suspension der Primärmischung und Sammeln des Filtrats, um eine nasse Vorstufe des Kunststoffmaterials zu erhalten; f) Dehydrieren der nassen Vorstufe des Kunststoffmaterials durch Kompression bei einem Druck zwischen 1.000 und 3 x 10⁸ Pa, um das Kunststoffmaterial zu erhalten, wobei das Kunststoffmaterial eine Restwassermenge zwischen 10 % und 20 % nach Gewicht bezogen auf das Gesamtgewicht des Kunststoffmaterials aufweist.

2. Verfahren nach Anspruch 1, wobei die wässrige Lösung, die Kasein und Molkenprotein enthält, eine Abfallflüssigkeit aus der Milchindustrie ist, ausgewählt aus der Gruppe bestehend aus: Kolostrum, Magermilch, teilentrahmter Milch, Vollmilch, Molke, haltbarer UHT-Milch und Mischungen davon.

3. Verfahren nach Anspruch 1 oder 2, wobei die saure wässrige Lösung eine Lösung in Wasser einer organischen oder anorganischen Säure ist, ausgewählt aus der Gruppe bestehend aus: Essigsäure, Zitronensäure, Äpfelsäure, Oxalsäure, Orotsäure, Asparaginsäure, Fumarsäure, Milchsäure, Maleinsäure, Pamoasäure, Weinsäure, Glycerophosphorsäure, Schleimsäure, 2-Aminoethansulfonsäure, Cholsäure, Trichloressigsäure oder Trifluoressigsäure, Chlorwasserstoffsäure, Bromwasserstoffsäure, Phosphorsäure und Mischungen davon.

4. Verfahren nach einem der Ansprüche 1 bis 3, wobei der Schritt des Zugebens des Geliermittels (c) die folgenden Unterschritte umfasst: ci) Bereitstellen eines trockenen Geliermittels; cii) Hydratisieren des trockenen Geliermittels in Wasser, wobei das Wasser eine Temperatur < 40°C aufweist, und Ruhenlassen für 5 bis 15 Minuten, um das Geliermittel in hydratisierter Form zu erhalten; ciii) Auspressen des Geliermittels in hydratisierter Form, um das Geliermittel zu erhalten.

5. Verfahren nach einem der Ansprüche 1 bis 4, wobei der Schritt d) des Koagulierens des Kaseins den Unterschritt des Zugebens eines ökologisch nachhaltigen Vernetzungsmittels umfasst.

6. Verfahren nach einem der Ansprüche 1 bis 5, wobei der Filtrationsschritt (e) die folgenden Unterschritte umfasst: ei) Abkühlen der wässrigen Suspension der Primärmischung auf Raumtemperatur; eii) Filtrieren der wässrigen Suspension der abgekühlten Primärmischung und Sammeln des Filtrats; eiii) Waschen des Filtrats mit Wasser oder wässrigen Lösungen bei einem pH-Wert zwischen 6 und 8 und Wiederholen des Filtrationsschritts eii), um die nasse Vorstufe des Kunststoffmaterials zu erhalten.

7. Verfahren nach einem der Ansprüche 1 bis 6, wobei der Filtrationsschritt (e) den Unterschritt des Mischens des Filtrats mit Zusatzstoffen umfasst, die ausgewählt sind aus der Gruppe bestehend aus: Weichmachern, weiteren Verdickungsmitteln, antimikrobiellen Mitteln, Duftessenzen, Farbstoffen, Konservierungsmitteln, Antioxidationsmitteln, verstärkenden Zusatzstoffen, organischen Füllstoffen.

8. Verfahren nach einem der Ansprüche 1 bis 7, die weiteren Schritte umfassend: g) Formen des Kunststoffmaterials; h) Trocknen des Kunststoffmaterials mittels
∘ einer Wärmebehandlung mit einem Luftstrom bei einer Temperatur zwischen 25°C und 35°C, oder
∘ einer mechanischen Kompressionsbehandlung unter Anwendung eines Drucks zwischen 1000 und 3 x 10⁸ Pa, oder
∘ Gefriertrocknung um das Kunststoffmaterial in trockener Form mit einem Restwassergehalt zwischen 5 % und 10 % nach Gewicht bezogen auf das Gesamtgewicht des Kunststoffmaterials zu erhalten.

9. Kompaktes und biologisch abbaubares Kunststoffmaterial, erhältlich durch das Verfahren nach einem der Ansprüche 1 bis 8.

10. Kunststoffmaterial nach Anspruch 9 mit einer Dichte zwischen 1.000-1.500 kg/m³.

11. Kunststoffmaterial nach Anspruch 9 oder 10, umfassend einen oder mehrere Weichmacher in einer Gesamtkonzentration zwischen 5 % und 80 % nach Gewicht bezogen auf das Gesamtgewicht des Kunststoffmaterials (w/w).

12. Kunststoffmaterial nach einem der Ansprüche 9 bis 11, umfassend organische Füllstoffe natürlichen Ursprungs.

13. Kunststoffmaterial nach Anspruch 12, wobei die organischen Füllstoffe natürlichen Ursprungs ausgewählt sind aus Samen, Pflanzenfasern und Schalen, die aus der Verarbeitung von Obst oder Gemüse oder organischen Abfällen jeglicher Art stammen.

14. Verwendung des Materials nach einem der Ansprüche 9 bis 13 zur Herstellung von Erzeugnissen, Folien, Filamenten, Pulver oder Pellets.

## Revendications

1. Procédé de préparation d'un matériau plastique et compostable, à base de polymères naturels, comprenant les étapes consistant à : a) préparer une solution contenant de la caséine et des protéines de lactosérum ; b) chauffer la solution aqueuse à une température comprise entre 10 et 100°C et en recueillir un volume prédéterminé ; c) ajouter un agent gélifiant au volume prédéterminé de la solution aqueuse pour obtenir un mélange primaire, l'agent gélifiant étant en des quantités comprises entre 0,1 et 50 g/L sur le volume prédéterminé de la solution aqueuse ; d) induire la coagulation de la caséine dans le mélange primaire, ladite étape d'induction de la coagulation comprenant l'addition d'une solution aqueuse acide au mélange primaire, de manière à obtenir une suspension aqueuse du mélange primaire ayant un pH compris entre 3 et 6 ; e) filtrer la suspension aqueuse du mélange primaire et recueillir le filtrat, pour obtenir un précurseur humide du matériau plastique ; f) déshydrater le précurseur humide du matériau plastique par compression, à une pression comprise entre 1 000 et 3 x 10⁸ Pa pour obtenir le matériau plastique, ledit matériau plastique ayant une quantité d'eau résiduelle comprise entre 10 % et 20 % en poids sur le poids total du matériau plastique.

2. Procédé selon la revendication 1, dans lequel la solution aqueuse contenant de la caséine et des protéines de lactosérum est un déchet liquide de l'industrie laitière choisi dans le groupe constitué par : le colostrum, le lait écrémé, le lait partiellement écrémé, le lait entier, le lactosérum, le lait UHT longue conservation et des mélanges de ceux-ci.

3. Procédé selon la revendication 1 ou 2, dans lequel la solution aqueuse acide est une solution dans l'eau d'un acide organique ou inorganique choisi dans le groupe constitué par : l'acide acétique, citrique, malique, oxalique, orotique, aspartique, fumarique, lactique, maléique, pamoïque, tartrique, glycérophosphorique, mucique, 2-amino-éthanesulfonique, cholique, trichloroacétique ou trifluoroacétique, chlorhydrique, hydrobromique, phosphorique et des mélanges de ceux-ci.

4. Procédé selon l'une quelconque des revendications 1 à 3, dans lequel l'étape d'addition de l'agent gélifiant (c) comprend les sous-étapes consistant à : ci) fournir un agent gélifiant sec ; cii) hydrater l'agent gélifiant sec dans de l'eau, l'eau ayant une température < 40°C, et laisser reposer pendant 5 à 15 minutes, de manière à obtenir l'agent gélifiant sous forme hydratée ; ciii) presser l'agent gélifiant sous forme hydratée, pour obtenir l'agent gélifiant.

5. Procédé selon l'une quelconque des revendications 1 à 4, dans lequel l'étape d) de coagulation de la caséine comprend la sous-étape consistant à ajouter un agent de réticulation éco-durable.

6. Procédé selon l'une quelconque des revendications 1 à 5, dans lequel l'étape de filtration (e) comprend les sous-étapes consistant à : ei) refroidir la suspension aqueuse du mélange primaire à température ambiante ; eii) filtrer la suspension aqueuse du mélange primaire refroidi et recueillir le filtrat ; eiii) laver le filtrat avec de l'eau ou des solutions aqueuses à un pH compris entre 6 et 8 et répéter l'étape de filtration eii) pour obtenir le précurseur humide du matériau plastique.

7. Procédé selon l'une quelconque des revendications 1 à 6, dans lequel l'étape de filtration (e) comprend la sous-étape consistant à mélanger le filtrat avec des additifs choisis dans le groupe constitué par : des plastifiants, des agents épaississants supplémentaires, des antimicrobiens, des essences parfumées, des colorants, des conservateurs, des antioxydants, des additifs de renforcement, des charges organiques.

8. Procédé selon l'une quelconque des revendications 1 à 7, comprenant les étapes supplémentaires consistant à : g) mettre en forme le matériau plastique ; h) sécher le matériau plastique au moyen de
∘ un traitement thermique avec un flux d'air à une température comprise entre 25°C et 35°C, ou
∘ un traitement par compression mécanique, en appliquant une pression comprise entre 1000 et 3 x 10⁸ Pa, ou
∘ une lyophilisation pour obtenir le matériau plastique sous forme sèche, ayant une teneur en eau résiduelle comprise entre 5 % et 10 % en poids sur le poids total du matériau plastique.

9. Matériau plastique compact et biodégradable susceptible d'être obtenu par le procédé selon l'une quelconque des revendications 1 à 8.

10. Matériau plastique selon la revendication 9, ayant une masse volumique comprise entre 1 000 et 1 500 kg/m³.

11. Matériau plastique selon la revendication 9 ou 10, comprenant un ou plusieurs plastifiants en une concentration totale comprise entre 5 % et 80 % en poids sur le poids total du matériau plastique (p/p).

12. Matériau plastique selon l'une quelconque des revendications 9 à 11, comprenant des charges organiques d'origine naturelle.

13. Matériau plastique selon la revendication 12, dans lequel les charges organiques d'origine naturelle sont choisies parmi des graines, des fibres végétales et des peaux dérivées de la transformation de fruits ou de légumes ou de déchets organiques de toute nature.

14. Utilisation du matériau selon l'une quelconque des revendications 9 à 13 pour la production d'objets manufacturés, de films, de filaments, de poudre ou de granulés.
